# FASCICULE DE BREVET EUROPEEN

(11) **EP 1 741 294 B1**
(45) Date de publication et mention de la délivrance du brevet: **01.02.2012**
(21) Numéro de dépôt: 05739577.4
(22) Date de dépôt: 10.03.2005
(51) Int. Cl.: H04N 21/258

(54) **PROCEDE ET DISPOSITIF DE TRAITEMENT AUTOMATIQUE D'INFORMATIONS SPONTANEES**
VERFAHREN UND EINRICHTUNG FÜR DIE AUTOMATISCHE VERARBEITUNG VON SPONTANDATEN
METHOD AND DEVICE FOR THE AUTOMATIC PROCESSING OF SPONTANEOUS DATA

(30) Priorité: 12.03.2004 FR 0402591
(43) Date de publication de la demande: 10.01.2007
(73) Titulaire: FRANCE TELECOM, 75015 Paris (FR)
(72) Inventeur: GASTINGER, René, F-35000 RENNES (FR); CUTULLIC, Christophe, F-35410 DOMLOUP (FR); DECERF, Erich, F-35300 FOUGERES (FR)
(74) Mandataire: Joly, Jean-Jacques
(86) Numéro de dépôt international: PCT/FR2005/000572
(87) Numéro de publication internationale: WO 2005/099266

(56) Documents cités:
- WO-A-00/59220
- US-A- 5 233 423
- US-A1- 2002 059 094
- US-A1- 2002 124 249
- US-A1- 2003 106 070

## Description

L'invention concerne un procédé et un dispositif de traitement automatique d'informations spontanées devant être restituées sur un terminal avec un flux multimédia.

Un domaine d'application de l'invention est les flux audio et/ou vidéo tels que les émissions de télévision, en différé ou en direct, enregistrées ou non, les films diffusés sur des chaînes de télévision et la vidéo à la demande (VOD).

Les informations spontanées sont par exemple destinées à être restituées temporairement sur le terminal, en plus du flux multimédia, pouvant donc être considéré comme étant un flux multimédia ayant un contenu principal, les informations spontanées pouvant donc être considérées comme ayant un contenu accessoire. Par exemple, les informations spontanées sont associées au flux multimédia en ce sens qu'elles sont liées au contenu de ce flux multimédia et peuvent être produites par la même entité que celle fournissant le flux multimédia.

Ces informations spontanées désignent par exemple les messages affichés en plus de l'image transportée par le flux multimédia sur l'écran du terminal de restitution et occupant une partie de celui-ci. Ces messages sont par exemple des images fixes également appelés messages en incrustation, affichés quelques secondes, par exemple pour indiquer une adresse et/ou un numéro de téléphone, pour inviter le spectateur à participer à un don, à un jeu ou à un vote, ou à d'autres fins. Ces messages peuvent également être un bandeau affiché au bas de l'écran pour y faire défiler du texte. Les informations spontanées peuvent également être désignées par le terme de fenêtre - publicité ou fenêtre contextuelle ou en anglais « pop up ». Les informations spontanées ne sont pas forcément synchronisées avec le flux multimédia et peuvent être indépendantes de celui-ci, comme par exemple pour de la publicité.

L'utilisateur du terminal ne souhaite pas toujours que lui soient présentées ces informations spontanées lorsqu'il reçoit le flux multimédia sur son terminal.

Certains utilisateurs considèrent que ces informations spontanées sont indésirables, occultent et polluent la restitution du flux multimédia que leur offre leur terminal.

L'utilisateur peut être peu réceptif aux informations spontanées et celles-ci peuvent détourner inutilement son attention et lui faire perdre le fil du contenu audiovisuel présenté dans le flux multimédia principal. L'utilisateur peut même être obligé d'acquitter ces informations pour les faire disparaître de son terminal et faire reprendre la restitution normale du flux principal sur celui-ci.

L'invention vise à obtenir un procédé et un dispositif qui permettent de pallier les inconvénients précités et d'améliorer le confort et la convivialité avec laquelle la restitution est effectuée sur le terminal pour son utilisateur.

est définie par les revendications

Grâce à l'invention, l'utilisateur a la possibilité de contrôler à l'avance et de filtrer la restitution des informations spontanées sur le terminal. Ainsi, seules les informations spontanées que l'utilisateur aura jugées pertinentes seront autorisées par le filtre d'analyse à être restituées sur le terminal, et les autres informations spontanées ne lui seront pas envoyées, seront donc ignorées et ne viendront pas perturber la présentation du contenu du flux multimédia en cours.

Suivant d'autres caractéristiques, non limitatives de l'invention,
- chaque information spontanée est associée à au moins une première caractéristique d'informations spontanées parmi le groupe de plusieurs caractéristiques prescrites d'informations spontanées et le terminal de restitution est associé à au moins une deuxième caractéristique d'informations spontanées parmi le groupe de plusieurs caractéristiques prescrites d'informations spontanées,
   la restitution, sur le terminal de restitution, du flux multimédia déclenche automatiquement
   l'envoi au filtre d'analyse, de la première et de la deuxième caractéristique d'informations spontanées, pour envoyer ou non au terminal de restitution, en fonction au moins de la première et de la deuxième caractéristique d'informations spontanées envoyées au filtre d'analyse, l'information spontanée,
   le terminal de restitution restituant l'information spontanée lorsqu'elle lui a été envoyée ;
- ladite au moins une première caractéristique d'informations spontanées de l'information spontanée comprend au moins un premier thème relatif à un contenu multimédia d'informations spontanées et ladite au moins une deuxième caractéristique d'informations spontanées du terminal comprend au moins un deuxième thème relatif à un contenu multimédia d'informations spontanées,
   le filtre d'analyse comparant le premier thème de l'information spontanée au deuxième thème du terminal pour autoriser, dans le cas où la comparaison détermine que le premier thème se retrouve dans le deuxième thème, l'envoi de l'information spontanée au terminal de restitution, et pour ne pas envoyer, dans le cas où la comparaison détermine que le premier thème ne se retrouve pas dans le deuxième thème, l'information spontanée au terminal de restitution ;
- la deuxième caractéristique d'informations spontanées est associée à un identifiant du terminal de restitution sur un serveur de gestion, distant du terminal de restitution, dans au moins une table, le filtre d'analyse se trouvant sur le serveur de gestion,
   et la restitution, sur le terminal de restitution, du flux multimédia, déclenche automatiquement l'interrogation par le filtre d'analyse de la deuxième caractéristique d'informations spontanées associée dans la table à l'identifiant du terminal de restitution ;
- l'association, dans table, de la deuxième caractéristique d'informations spontanées à l'identifiant du terminal de restitution, est exécutée à partir du terminal de restitution ;
- ladite au moins une première caractéristique d'informations spontanées de l'information spontanée comprend au moins un premier indicateur de restitution, destiné au terminal et/ou ladite au moins une deuxième caractéristique d'informations spontanées du terminal comprend au moins un deuxième indicateur de restitution, destiné au terminal,

le filtre d'analyse commandant, en cas d'autorisation, l'envoi de l'information spontanée au terminal de restitution en respectant le deuxième indicateur de restitution du terminal ou, à défaut de deuxième indicateur de restitution du terminal, le premier indicateur de restitution de l'information spontanée ;
- le deuxième thème du terminal est associé à l'identifiant du terminal de restitution, dans une table d'intérêt du serveur de gestion,
   et/ou le deuxième indicateur de restitution du terminal est associé à l'identifiant du terminal de restitution, dans une table d'indicateurs du serveur de gestion,
   et la restitution, sur le terminal de restitution, du flux multimédia, déclenche automatiquement l'interrogation par le filtre d'analyse du deuxième thème associé dans la table d'intérêt à l'identifiant du terminal de restitution et déclenche, en cas d'autorisation d'envoi de l'information spontanée, l'interrogation par le filtre d'analyse du deuxième indicateur de restitution associé dans la table d'indicateurs à l'identifiant du terminal de restitution ou, à défaut de deuxième indicateur de restitution, l'interrogation par le filtre d'analyse du premier indicateur de restitution ;
- le premier indicateur de restitution de l'information spontanée et/ou le deuxième indicateur de restitution du terminal sont choisis chacun parmi un indicateur de restitution immédiate sur le terminal pour commander l'envoi immédiat de l'information spontanée au terminal de restitution et un indicateur de restitution non immédiate pour commander l'envoi de l'information spontanée au terminal de restitution en cas de détection d'un événement déclencheur déterminé par le filtre d'analyse ;
- l'événement déclencheur est déterminé parmi la fin de la restitution du flux multimédia sur le terminal, l'émission sur le terminal d'une demande d'arrêt de la restitution du flux, l'arrêt sur le terminal de la restitution du flux, le passage du terminal à un autre flux ou programme, une heure prédéfinie de restitution de l'information spontanée sur le terminal, une durée prescrite pour différer la restitution sur le terminal de l'information spontanée, une durée prescrite pour différer la restitution sur le terminal de l'information spontanée après la restitution sur celui-ci d'une information spontanée précédente, une action provoquée par l'utilisateur sur le terminal ;
- la première caractéristique d'informations spontanées est associée à l'information spontanée sur une base de données de fourniture de l'information spontanée, distante du terminal de restitution,
et la restitution, sur le terminal de restitution, du flux multimédia, déclenche automatiquement l'interrogation par le filtre d'analyse de la première caractéristique d'informations spontanées associée, dans la base de données, à l'information spontanée.

L'invention sera mieux comprise à la lecture de la description qui va suive, donnée uniquement à titre d'exemple non limitatif en référence aux dessins annexés, sur lesquels :
- la figure 1 représente schématiquement un exemple de dispositif de traitement automatique d'informations spontanées, mettant en oeuvre le procédé de traitement automatique d'informations spontanées suivant l'invention,
- la figure 2 représente schématiquement une interface pour l'utilisateur sur son terminal lors d'une phase d'initialisation du procédé de traitement automatique d'informations spontanées suivant l'invention,
- la figure 3 représente schématiquement le déroulement du procédé de traitement automatique d'informations spontanées suivant l'invention,
- la figure 4 représente schématiquement un exemple du déroulement du procédé de traitement automatique d'informations spontanées suivant l'invention, pour un flux multimédia de télévision, et
- la figure 5 représente schématiquement un exemple du déroulement du procédé de traitement automatique d'informations spontanées suivant l'invention, pour un flux multimédia de vidéo à la demande.

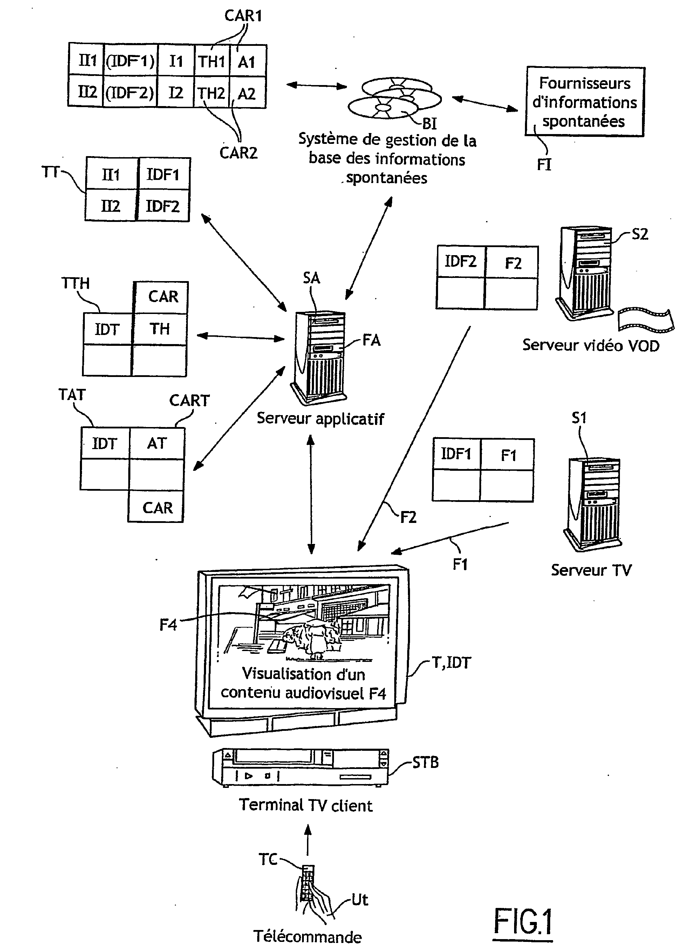

A la figure 1, un utilisateur **Ut** dispose d'un terminal **T** de restitution de flux multimédia.

Le flux véhicule un contenu multimédia, contenant de l'information ayant un sens pour l'utilisateur **Ut** et destiné à lui être présenté par le terminal **T.** Le terme multimédia s'entend d'informations audio et/ou vidéo ou autre, pouvant être par exemple de la musique, un film et plus généralement toute oeuvre audiovisuelle ou multimédia.

La restitution de flux ou d'informations reçus par le terminal peut prendre la forme par exemple d'un affichage sur écran et/ou d'une émission sonore par un ou plusieurs haut-parleurs. A la figure 1, le terminal **T** de restitution est par exemple un poste de télévision, éventuellement muni d'un décodeur ou de tout autre boîtier STB (en anglais *Set Top Box*, STB). Le terminal **T** de restitution pourrait également être un ordinateur ayant un moniteur de visualisation et des haut-parleurs. Le flux multimédia provient de l'extérieur du terminal **T** de restitution. Le flux provient par exemple d'un serveur **S1** de télévision ou d'un serveur **S2** de vidéo à la demande, situés à distance du terminal **T.** Le serveur **S2** contient par exemple en plus un catalogue de vidéo et de bandes annonces de celle-ci, qui sont accessibles du terminal **T.**

Le procédé suivant l'invention se déroule de la manière suivante.

On suppose que l'utilisateur Ut sélectionne sur son terminal **T** de restitution au cours de l'étape initiale **E1** un flux **F1 ou F2** parmi ceux présents sur les serveurs **S1, S2,** par exemple le film F2 à la figure 1. A chaque flux **F1, F2** multimédia est par exemple associé respectivement un identifiant **IDF1, IDF2** de flux sur les serveurs **S1** et **S2** et la sélection du flux **F1 ou F2** est effectuée dans ce cas par l'utilisateur **Ut** sur son terminal **T** de restitution par l'identifiant **IDF1** ou **IDF2.** Cette sélection est effectuée en sélectionnant une chaîne de télévision de manière classique dans le cas d'un poste de télévision, par exemple dans un bouquet de chaînes de télévision reçues et accessibles en ligne par des terminaux STB ou PC connectés au réseau Internet ou en sélectionnant l'identifiant de flux parmi plusieurs d'un catalogue ou d'un guide de programmes envoyé par le serveur **S1** et/ou **S2** au terminal **T,** accessibles en ligne par des terminaux STB ou PC au réseau Internet et présenté ou affiché sur le terminal **T** à l'utilisateur **Ut.** Chaque identifiant **IDF1, IDF2** de flux affiché sur l'écran du terminal **T** peut par exemple être balayé en affichant du texte ou une image illustrant le contenu associé, par exemple l'affiche, le résumé du film ou de l'émission véhiculé par ce flux, une bande annonce, ces informations complémentaires étant envoyées avec l'identifiant de flux par le serveur **S1** et/ou **S2** au terminal **T.** La sélection est par exemple effectuée par l'utilisateur **Ut** à l'aide d'une télécommande **TC,** ainsi que représenté.

L'identifiant **IDF1, IDF2** de flux sélectionné à l'étape **E1** (film **F4** dans l'exemple illustré) sur le terminal **T** est envoyé dans un message de demande de flux ayant été sélectionné du terminal **T** à un serveur **SA** de gestion à l'étape suivante **E2.** Chaque terminal **T** de restitution possède un identifiant **IDT** de terminal de restitution préenregistré dans le serveur **SA** de gestion, qui est également précisé dans le message de demande de flux qu'il envoie au serveur **SA.** Le serveur **SA** enregistre alors le message de demande de flux en instance et envoie alors à l'étape suivante **E3** une requête en flux **F1, F2** correspondant à l'identifiant **IDF1, IDF2** présent dans ce message de demande de flux respectivement au serveur **S1, S2** correspondant.

Le serveur **S1, S2** ayant reçu la requête de flux fournit ensuite à l'étape **E4** le flux **F1, F2** correspondant à l'identifiant **IDF1, IDF2** présent dans celle-ci et dans le message de demande de flux au serveur **SA** de gestion, lequel retransmet l'étape **E5** ce flux **F1, F2** au terminal **T** correspondant à l'identifiant **IDT** présent dans le message de demande de flux enregistré en instance dans le serveur **SA.** Les flux **F1, F2** sont transmis au terminal **T** par exemple en lecture en transit (en anglais streaming).

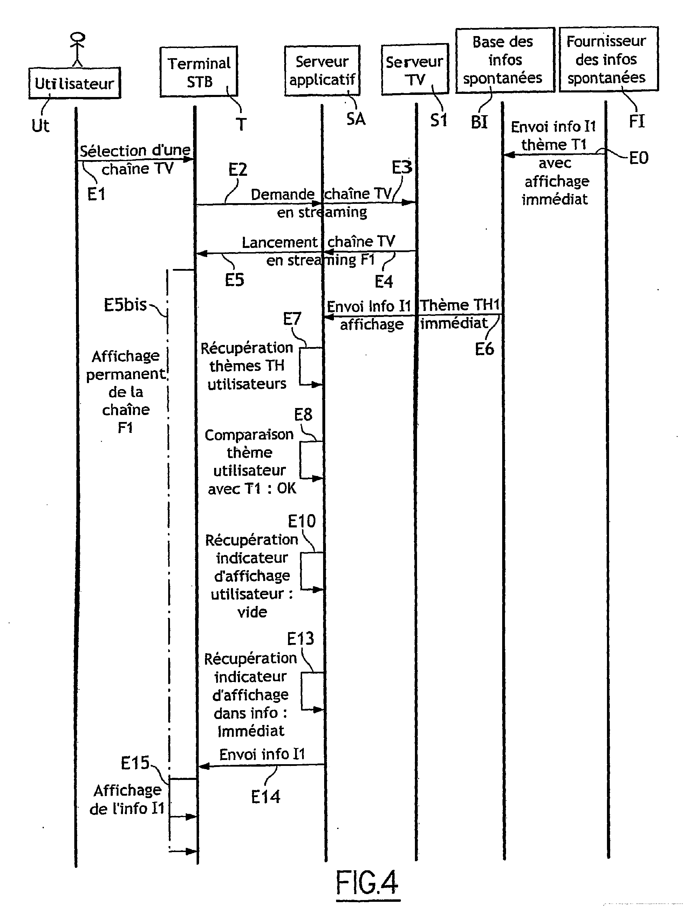

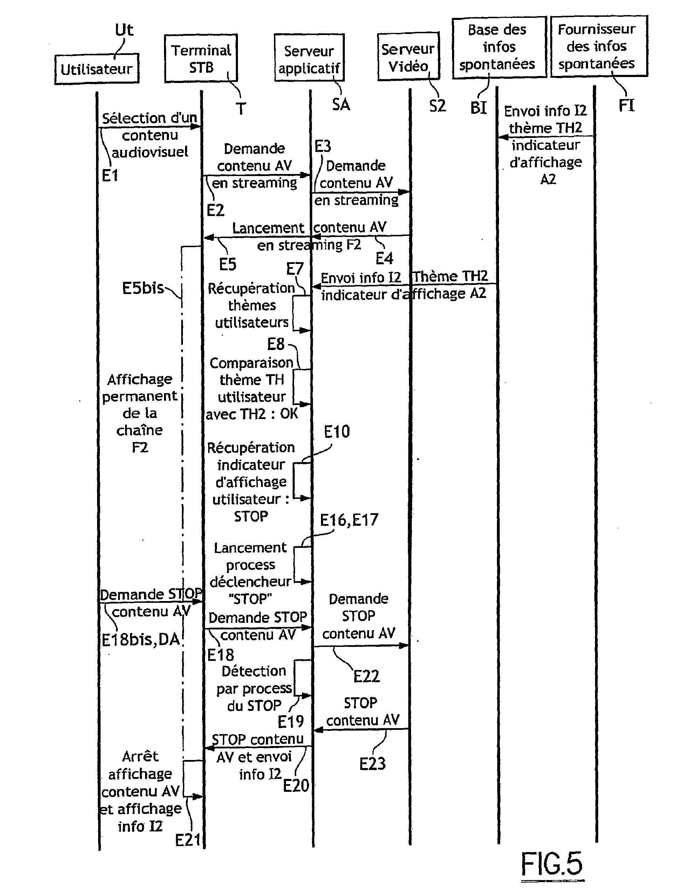

Le terminal restitue alors à l'étape **E5bis** le flux **F1, F2** reçu à l'étape **E5,** par exemple en passant le film ou l'émission **F1, F2** sur son écran de visualisation et ses haut-parleurs, ainsi que cela est indiqué par les traits interrompus aux figures 4 et 5, qui correspondent dans ce cas à l'affichage en permanence du flux **F1, F2** sur l'écran du terminal **T.**

On suppose qu'il est prévu de restituer sur les terminaux des utilisateurs, en plus du flux **F1, F2** présent sur les serveurs **S1** et **S2** et simultanément à celui-ci, des informations spontanées **Il,** I2. Des informations spontanées **Il, I2** peuvent être prévues pour plusieurs des flux **F1, F2,** pour chacun de ceux-ci ou pour tous les flux **F1, F2** et peuvent être associées à un flux **F1** ou **F2** spécifique ou être indépendants de ceux-ci. Les informations spontanées **I1, I2** sont des contenus multimédia : messages texte, images animées ou fixes, sons, vidéos, applications interactives. Ces informations spontanées **I1, I2** sont produites par un ou plusieurs fournisseurs ou opérateurs FI**,** par exemple lors de ou suite à l'enregistrement des flux **F1, F2** sur les serveurs **S1, S2.** Au préalable lors de l'étape **E0,** c'est-à-dire avant l'étape **E1** ou au moins avant l'étape **E6** décrite ci-dessous, les informations spontanées **I1, I2** sont envoyées et stockées, par le(s) fournisseur(s) **FI** dans une ou plusieurs bases **BI,** désignées ci-après par le terme générique de base **BI,** en vue de leur envoi aux terminaux des utilisateurs. La base **BI** de données est située à distance du terminal **T.** La base **BI** représente par exemple un système de gestion de la base des informations spontanées.

Dans les modes de réalisations représentés aux figures et décrits ci-dessous, chaque information spontanée **I1, I2** est associée à une ou plusieurs première(s) caractéristique(s) **CAR1, CAR2** sur la base **BI** d'informations spontanées. Les caractéristiques **CAR1, CAR2** sont par exemple en rapport avec le contenu multimédia de l'information spontanée associée **I1, I2.**

La première caractéristique **CAR1, CAR2** de l'information spontanée **I1, I2** peut être par exemple un ou plusieurs premiers thèmes **TH1, TH2** du contenu multimédia, par exemple "aventure", "suspense", "thriller", "sport", "policier", "horreur", "information", "humour", "famille", "comédie", "tragédie", "drame", "action", "fantastique", "adultes", "jeunesse", "enfant", "musique", "documentaire", "séries", "connaissances", "ciné-club", "documentaire", "magazine", "ma région", "culture", "divertissement", "jeu", "publicité", etc.

La première caractéristique **CAR1, CAR2** de l'information spontanée **I1, I2** peut également être par exemple un premier indicateur **A1**, **A2** de restitution pour par exemple une restitution commandée sur le terminal **T** immédiatement ou inconditionnellement, ou pour une restitution non immédiate et commandée par un événement déclencheur choisi parmi une liste d'évènements déclencheurs tels que par exemple les suivants : la fin du flux (fin du programme telle qu'une vidéo ou une émission de télévision), l'arrêt ou la demande d'arrêt sur le terminal **T** de la restitution du flux, le passage du terminal **T** à un autre flux ou programme (action de zapper de l'utilisateur **Ut** d'une chaîne de télévision à une autre, arrêt de la vidéo sur le terminal **T** par l'utilisateur **Ut,** ou autres), une heure prédéfinie de restitution sur le terminal **T** (une heure programmée par exemple dans le calendrier de diffusion de la base **BI,** minuit pour le jour de l'an, départ d'une course de bateaux, ou autres), un temps prescrit après la restitution sur le terminal **T** d'une information spontanée précédente (cette information spontanée précédente étant par exemple une question, le temps prescrit étant dans ce cas un temps de réflexion pour l'utilisateur **Ut** pour donner une réponse à la question), l'écoulement d'une durée prédéfinie pour la restitution de l'information spontanée sur le terminal **T.** Par exemple, un indicateur **A1, A2** de restitution est associé à un ou plusieurs thème(s) **TH1, TH2** déterminé(s) ou à tous les thèmes **TH1, TH2.** Le ou les indicateurs **A1, A2, AT** peuvent être des indicateurs de restitution immédiate ou différée.

Les caractéristiques d'informations spontanées sont par exemple des caractéristiques de contenu audiovisuel et leur restitution correspond par exemple à leur affichage sur l'écran du terminal **T.**

L'affectation et l'enregistrement des caractéristiques **CAR1, A1, TH1, CAR2, A2, TH2** dans la base **BI** est effectuée par le(s) fournisseur(s) **FI,** par le(s) fournisseur(s) des contenus des flux **F1** et **F2,** pouvant gérer les contenus sur les serveurs **S1** et **S2** ou par le fournisseur du service.

Le serveur **SA** de gestion, ou serveur applicatif, situé à distance du terminal **T,** héberge pour chaque terminal **T** de restitution, une ou plusieurs caractéristiques **CART** de filtrage d'informations spontanées, appelées deuxièmes caractéristiques **CART** d'informations spontanées, ayant été définies par l'utilisateur **Ut,** par exemple à partir de son terminal **T** ayant communiqué ces caractéristiques au serveur **SA** de gestion. Pour ce faire, des caractéristiques **CART** de filtrage d'informations spontanées sont associées au terminal **T** de restitution, l'identifiant **IDT** du terminal **T** de restitution étant associé dans le serveur **SA** de gestion à ces caractéristiques **CART** de filtrage d'informations spontanées. Ces deuxièmes caractéristiques **CART** comportent, dans les modes de réalisation représentés aux figures, un ou plusieurs deuxièmes thèmes ou centres d'intérêt **TH** dans une table d'intérêt **TTH** et/ou un deuxième indicateur **AT** de restitution dans une table **TAT** d'indicateurs de restitution. Ces caractéristiques **CART** sont choisies parmi un groupe de caractéristiques **CAR** de filtrage d'informations spontanées prescrites sur le serveur **SA** et donc dans l'exemple précédent dans un groupe de thèmes **TH** et dans un groupe d'indicateurs **AT** de restitution. Les thèmes **TH1, TH2** des informations spontanées **I1, I2** et les indicateurs **A1**, **A2** de restitution des informations spontanées **I1**, **I2** sont par exemple également prescrits parmi ces mêmes groupe de thèmes TH et groupe d'indicateurs **AT** de restitution, tels que ceux indiqués ci-dessus.

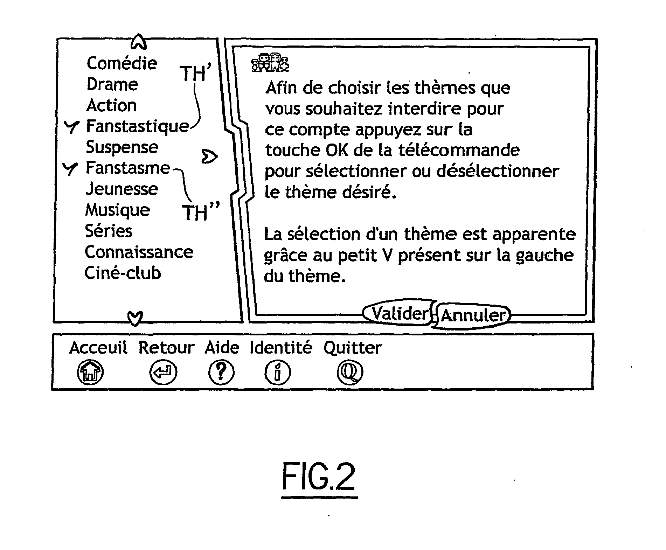

La création des tables **TTH, TAT** pour le terminal **T** est effectuée par exemple lors de la mise en service du terminal **T** de restitution ou lors de la prise d'abonnement du terminal **T** au service mis en oeuvre par l'invention, ainsi que cela est représenté à la figure 2 par des affichages sur un écran de télévision et est décrit ci-dessous.

Le dispositif suivant l'invention est par exemple réalisé de la manière suivante. La communication entre le terminal **T** et le serveur **SA** est assurée par exemple par une connexion à un réseau informatique, comme par exemple le réseau Internet, le poste **T** ou le boîtier **STB** disposant de moyens de connexion correspondants, et le procédé de filtrage suivant l'invention est mis en oeuvre par exemple dans un portail de services multimédias proposant un bouquet de chaînes de télévision et un catalogue de vidéos à la demande, accessibles en ligne à des terminaux **T.** Le terminal **T** ou le boîtier **STB** intègre par exemple un navigateur de type Internet qui va permettre la connexion au réseau **IP** via le protocole http, d'afficher les pages du service, de gérer l'interactivité locale via une télécommande, ou d'afficher des chaînes TV ou des vidéo en lecture en transit (streaming) et de lancer les requêtes vers le serveur **SA.** Le serveur **SA** héberge le portail de services sous la forme de pages HTML/JavaScript générées dynamiquement et est capable d'interroger la base **BI** de données. Un exemple de réalisation de l'invention est un portail audiovisuel sur réseau ADSL, destiné à des terminaux STB ou **PC.**

Une interface est prévue sur le terminal **T** pour choisir ou modifier les deuxièmes caractéristiques **CART**. Pour ce faire, l'utilisateur sélectionne d'abord son identifiant **IDT** sur son terminal **T** pour établir la connexion avec le serveur **SA** ou se connecte directement à celui-ci. Puis, le serveur **SA** de gestion fait passer le terminal T à un affichage où il est proposé à la personne de choisir les caractéristiques **CART**, **TH**, **AT** de filtrage parmi les caractéristiques **CAR** de filtrage prescrites. Ces caractéristiques **CAR** sont préenregistrées dans le serveur **SA** et y sont tenues disponibles, pour pouvoir être sélectionnées en association avec le terminal **T**, comme caractéristiques **CART**. Par défaut, ainsi que cela est représenté sur la figure 2 par les thèmes **TH'** et **TH"** cochés, il peut être proposé à la personne de choisir les caractéristiques **CAR** de contenu multimédia, qui ne seront pas associées au terminal **T,** et qui ne seront donc pas des deuxièmes caractéristiques **CART, TH, AT** du terminal **T** et seront des caractéristiques **CAR** interdites du terminal **T**. Les deuxièmes caractéristiques **CART, TH, AT** du terminal **T** sont donc les caractéristiques définies comme étant pertinentes pour l'utilisateur **Ut.**

Dans ce qui suit, le procédé est décrit en référence à la figure 4 pour le cas où un flux **F1** a été sélectionné dans le serveur **S1.** Bien entendu, ce qui est indiqué pour **S1, F1, IDF1, I1, CAR1, TH1, A1, II1** est également valable pour **S2, F2, IDF2, I2, CAR2, TH2, A2, II2** pour le cas où à la figure 5 un flux **F2** a été sélectionné dans le serveur **S2** et est restitué sur le terminal **T.**

Lors de l'étape **E6,** la base **BI** envoie la ou les information(s) spontanée(s) **Il,** désignée ci-après par information spontanée **Il,** au serveur **SA** de gestion. La base **BI** comporte par exemple à cet effet un calendrier de diffusion de l'information spontanée **I1** vers les terminaux **T** des utilisateurs. En supplément ou en remplacement, l'information spontanée **I1** peut également faire référence à un flux **F1** associé sur le serveur **S1,** par exemple dans ce qui suit en étant enregistrées sur la base **BI** en association avec l'identifiant **IDF1** du flux **F1** notamment lorsque l'information spontané **I1** est liée à ce flux **F1.** En variante, le serveur **SA** de gestion dispose au préalable d'une table **TT** associant à des identifiants **IDF1, IDF2** de flux **F1, F2,** des identifiants **II1, II2** des informations spontanées, lesquels identifiants **II1, II2** sont associés dans la base **BI** aux informations spontanées **I1, I2.** Dans cette variante, pour recevoir l'information spontanée **I1** à l'étape **E6,** le serveur **SA** de gestion a demandé à la base **BI** suite à l'étape **E2** l'information spontanée **I1, I2** associée dans celle-ci à l'identifiant **II1** correspondant dans la table **TT** à l'identifiant **IDF1** présent dans le message de demande de flux reçu par le serveur **SA.**

L'information spontanée **I1** envoyée de la base **BI** au serveur **SA** de gestion à l'étape **E6** est accompagnée de ses caractéristiques **CAR1, TH1, A1.**

Par exemple, les paramètres **CART** de l'utilisateur **Ut** sont pris en compte prioritairement par rapport à ceux **CAR1, CAR2** de l'information spontanée **I1, I2** et les paramètres **CAR1, CAR2** de l'information spontanée **I1, I2** sont pris en compte par défaut, ou en l'absence des paramètres **CART, CAR1, CAR2,** l'information spontanée **I1, I2** est restituée sur le terminal **T** selon les étapes **E14** et **E15** décrites ci-après.

Après l'étape **E6,** le serveur **SA** de gestion interroge les caractéristiques **CART** de filtrage d'informations spontanées, associées au terminal **T,** c'est-à-dire dans l'exemple décrit ci-dessus les deuxièmes caractéristiques **CART** associées dans le serveur **SA** à l'identifiant **IDT** déterminé précédemment dans le message de demande de flux enregistré en instance dans le serveur **SA.**

Puis le serveur **SA** de gestion analyse, par un moyen technique approprié tel qu'un filtre **FA,** la première caractéristique **CAR1,** reçue de la base **BI** pour l'information spontanée **I1** et la deuxième caractéristique **CART,** obtenue lors de l'interrogation. Dans ce qui suit, le filtre **FA** est représenté par le serveur **SA** de gestion.

Dans les modes de réalisation représentés aux figures, le serveur **SA** de gestion interroge d'abord à l'étape **E7** le(s) thème(s) **TH** associé(s) dans la table **TTH** d'intérêt à l'identifiant **IDT** du terminal **T** de restitution, déterminé précédemment.

Puis, le serveur **SA** de gestion compare à l'étape **E8** le thème **TH1** de l'information spontanée **I1** au(x) thème(s) **TH** du terminal **T.** Dans le cas où cette comparaison détermine que le thème **TH1** est différent de tous ces thèmes **TH,** l'information spontanée **I1** est ignorée à l'étape **E9** et n'est pas envoyée au terminal **T** pour y être restituée. Ainsi, l'information spontanée **I1** ne perturbera pas dans ce cas la restitution du flux **F1** sur le terminal **T.** Dans le cas de l'étape **E9,** l'information spontanée **I1** reçue de la base **BI** est par exemple supprimée du serveur **SA** de gestion. Dans le cas où cette comparaison détermine que le thème **TH1** est égal ou correspond à l'un de ces thèmes **TH,** l'étape **E10** est exécutée.

Lors de cette étape **E10,** le serveur **SA** de gestion interroge la table **TAT** d'indicateurs de restitution pour savoir s'il en existe un associé à l'identifiant **IDT** du terminal **T** de restitution.

Dans l'affirmative à l'étape **E10,** le serveur **SA** de gestion lit à l'étape **E11** dans la table **TAT** l'indicateur **AT** de restitution, qui est associé à l'identifiant **IDT** du terminal **T** de restitution et qui sera donc utilisé par la suite comme indicateur de restitution, et il est passé à l'étape suivante **E13.** Par conséquent, si la table **TAT** est renseignée pour le terminal **T,** le deuxième indicateur **AT** de ce terminal **T,** indicateur **AT** correspondant au thème **TH** = **TH1** de l'information spontanée **Il,** sera pris en compte.

Dans la négative à l'étape **E10,** le serveur **SA** de gestion lit à l'étape **E12** l'indicateur **A1** de restitution, associé à l'information spontanée **Il,** qui sera donc utilisé par la suite comme indicateur de restitution, et il est passé à l'étape suivante **E13.** Par conséquent, si la table **TAT** est vide pour le terminal T, le premier indicateur **A1** de l'information spontanée **I1** sera pris en compte.

Lors de l'étape **E13,** le serveur **SA** de gestion contrôle si l'indicateur de restitution utilisé **AT** ou **A1** est un indicateur de restitution immédiate, comme par exemple un indicateur d'affichage immédiat. Dans la négative aux étapes **E10** et **E12,** c'est-à-dire si aucun indicateur **AT** ou **A1** n'est présent dans la table **TAT** pour le terminal **T** ou en association avec l'information **I1,** il est passé directement de l'étape **E13** à l'étape **E14.**

Dans l'affirmative à l'étape **E13,** ainsi que cela est illustré à la figure 4, l'information spontanée **I1** est envoyée immédiatement à l'étape **E14** par le serveur **SA** de gestion au terminal **T,** où elle y est restituée dès réception à l'étape **E15,** le terminal **T** étant agencé pour restituer immédiatement les informations spontanées qu'il reçoit. Dans le cas d'une information spontanée **I1** visuelle, celle-ci est donc immédiatement affichée sur l'écran du terminal **T.**

Dans la négative à l'étape **E13,** le serveur **SA** interroge à l'étape **E16** l'évènement déclencheur prédéfini dans l'indicateur de restitution utilisé **AT** ou **A1** et surveille à l'étape **E17** la survenue de cet évènement déclencheur. Des signaux sont par exemple envoyés au serveur **SA** de gestion pour lui communiquer la survenue des évènements, lorsque ces évènements dépendent d'une entité autre que sle serveur **SA,** comme les évènements provenant du terminal **T,** ainsi que cela sera décrit ci-dessous. L'évènement déclencheur surveillé par le serveur **SA** est par exemple à la figure 5 l'émission vers le serveur **SA** de gestion à l'étape **E18,** commandée par l'utilisateur à l'étape **E18bis** sur le terminal **T,** d'une demande **DA** d'arrêt de la restitution du flux **F2** sur celui-ci à l'étape **E5bis.** Bien entendu, ce pourrait être un autre des événements mentionnés ci-dessus pour les indicateurs **A1, A2** ou d'autres évènements.

Lorsque l'évènement déclencheur est détecté à l'étape **E19** par le serveur **SA** de gestion - c'est-à-dire dans l'exemple de la figure 5, lorsque le serveur **SA** de gestion a reçu à l'étape **E18** du terminal **T** la demande **DA** d'arrêt de restitution du flux **F2** -, l'information spontanée **I1, I2** est envoyée à l'étape **E20** par le serveur **SA** de gestion au terminal **T,** où elle y est restituée dès réception à l'étape **E21.** Dans le cas de la demande **DA** d'arrêt à la figure 5, l'étape **E18** est également suivie sur le serveur **SA** par une étape **E22** de transmission de la demande **DA** d'arrêt au serveur **S2** qui va alors provoquer sur celui-ci l'arrêt de l'envoi du flux **F2** au terminal **T** et envoyer un message d'arrêt au serveur **SA** à l'étape **E23** puis au terminal **T** lors de l'étape **E20.**

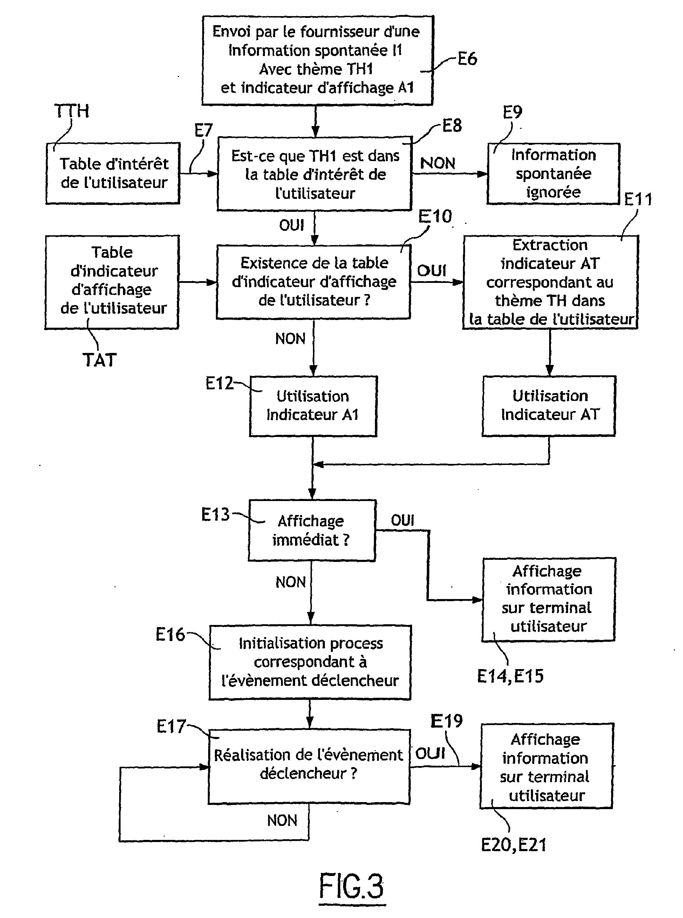

Dans le cas où l'évènement déclencheur présent dans l'indicateur de restitution **AT** ou **A1** utilisé est l'arrivée d'une durée prédéfinie (par exemple 10 minutes) pour différer la restitution (par exemple l'affichage) sur le terminal **T,** l'information spontanée **I1** est conservée sur le serveur **SA** de gestion pendant cette durée pendant l'étape **E17** à la figure 3, l'écoulement de la durée prédéfinie est surveillé pendant l'étape **E17** et détecté à l'étape **E19** par le serveur **SA** de gestion (par exemple par une horloge de celui-ci), ce qui provoque l'envoi à l'étape **E20** de l'information spontanée **I1** du serveur **SA** au terminal **T,** pour sa restitution sur celui-ci dès réception à l'étape **E21.** Lorsque la restitution de l'information spontanée **I1, I2** sur le terminal **T** est différée, soit la restitution du flux **F1, F2** à l'étape **E5bis** est interrompue et différée d'autant pour reprendre à l'endroit atteint lors de l'interruption, soit la restitution de l'information spontanée **I1, I2** et la restitution du flux **F1, F2** à l'étape **E5bis** sur le terminal **T** sont superposées, soit la restitution du flux **F1, F2** à l'étape **E5bis** est supprimée sur le terminal **T** pendant la restitution de l'information spontanée **I1, I2** et n'est pas différée mais reprend à l'endroit atteint à la fin de la restitution de l'information spontanée **I1, I2.**

Dans le cas où l'évènement déclencheur présent dans l'indicateur de restitution **AT** ou **A1** utilisé est une heure prédéterminée pour la restitution (par exemple l'affichage) sur le terminal **T,** l'information spontanée **I1** est conservée sur le serveur **SA** de gestion pendant l'étape **E17** à la figure 3, l'arrivée de cette heure prédéterminée est surveillée pendant l'étape **E17** et détectée à l'étape **E19** par le serveur **SA.** de gestion (par exemple par une horloge de celui-ci), ce qui provoque l'envoi à l'étape **E20** de l'information spontanée **I1** du serveur **SA** au terminal **T,** pour sa restitution sur celui-ci dès réception à l'étape **E21.**

Dans le cas où l'évènement déclencheur présent dans l'indicateur de restitution **AT** ou **A1** utilisé est une action provoquée par l'utilisateur sur le terminal **T** et signalée au serveur **SA** de gestion (tel que l'exemple de la demande **DA** d'arrêt à la figure 5, ou le fait pour l'utilisateur de zapper sur son terminal **T**), l'information spontanée **I1** est conservée sur le serveur **SA** de gestion pendant l'étape **E17** à la figure 3, le serveur **SA** de gestion surveille les interactions du terminal **T** avec le serveur **SA** pendant l'étape **E17** et détecte l'arrivée de cet action à l'étape **E19,** ce qui provoque l'envoi à l'étape **E20** de l'information spontanée **I1** du serveur **SA** au terminal **T,** pour sa restitution sur celui-ci dès réception à l'étape **E21.**

Ainsi, l'invention permet d'afficher immédiatement ou de différer la visualisation des informations spontanées pertinentes, en fonction des critères **A1, A2** définis par le fournisseur de ces informations spontanées et en fonction des critères **AT** définis par l'utilisateur. L'invention permet également de déclencher automatiquement la visualisation des informations spontanées différées, lors de la réalisation d'évènements choisis par l'utilisateur : fin ou arrêt du flux de contenu audiovisuel, changement de chaîne de télévision, heure prédéterminée, arrivée d'une autre information spontanée, etc.

## Revendications

1. Procédé de traitement automatique d'informations spontanées destinées à être restituées sur un terminal (T) de restitution en tant que flux accessoire associé à un flux multimédia principal.
**caractérisé en ce que**
chaque information spontanée (I1, I2) est associée à au moins une première caractéristique (CAR1, CAR2) d'informations spontanées parmi un groupe de plusieurs caractéristiques (CAR) prescrites d'informations spontanées,
le terminal (T) de restitution est associé à au moins une deuxième caractéristique (CART) d'informations spontanées parmi le groupe de plusieurs caractéristiques (CAR) prescrites d'informations spontanées,
ladite au moins une première caractéristique (CAR1, CAR2) d'informations spontanées de l'information spontanée (I1, I2) comprenant au moins un premier indicateur (A1, A2) de restitution, destiné au terminal (T), ladite au moins une deuxième caractéristique (CART) d'informations spontanées du terminal (T) pouvant comprendre au moins un deuxième indicateur (AT) de restitution, destiné au terminal (T), chacun desdits premier et deuxième indicateurs de restitution étant un indicateur de restitution immédiate ou un indicateur de restitution différée ;
et **en ce que** le procédé comprend :
l'envoi automatique, à partir d'un flux multimédia (F1, F2) restitué sur le terminal (T), de la première et de la deuxième caractéristique (CAR1, CAR2, CART) d'informations spontanées à un filtre (FA) d'analyse,
l'analyse (E7, E8, E10), par le filtre d'analyse, des première et deuxième caractéristiques d'informations spontanées reçues, le filtre d'analyse étant configuré pour déterminer, lors de ladite analyse, si la deuxième caractéristique d'informations spontanées reçue comprend au moins un deuxième indicateur (AT) de restitution destiné audit terminal, en cas d'autorisation, la commande (E13, E16, E17), par le filtre (FA) d'analyse, de l'envoi soit immediat soit différé (E14, E20) de l'information spontanée (I1, I2) au terminal (T) de restitution conformément au deuxième indicateur (AT) de restitution ou, en cas d'absence d'un deuxième indicateur (AT) de restitution dans la deuxième caractéristique d'informations spontanées reçue, conformément au premier indicateur (A1, A2) de restitution reçu,
la restitution, par le terminal (T), de l'information spontanée (I1, 12) lorsque celle-ci lui a été envoyée.

2. Procédé de traitement suivant la revendication 1, **caractérisé en ce que**
le premier indicateur (A1, A2) de restitution et/ou le deuxième indicateur (AT) de restitution sont choisis chacun parmi un indicateur de restitution immédiate sur le terminal (T) pour commander l'envoi immédiat (E14) de l'information spontanée (I1, I2) au terminal (T) de restitution et un indicateur de restitution non immédiate pour commander l'envoi (E20) de l'information spontanée (I1, I2) au terminal (T) de restitution en cas de détection (E19) d'un évènement déclencheur déterminé par le filtre (FA) d'analyse.

3. Procédé de traitement suivant la revendication 2, **caractérisé en ce que**
l'évènement déclencheur est déterminé parmi la fin de la restitution du flux (F1, F2) multimédia sur le terminal (T), l'émission sur le terminal (T) d'une demande d'arrêt de la restitution du flux (F1, F2), l'arrêt sur le terminal (T) de la restitution du flux (F1, F2), le passage du terminal (T) à un autre flux (F1, F2) ou programme, une heure prédéfinie de restitution de l'information spontanée (I1, I2) sur le terminal (T), une durée prescrite pour différer la restitution sur le terminal (T) de l'information spontanée (I1, I2), une durée prescrite pour différer la restitution sur le terminal (T) de l'information spontanée (I1, I2) après la restitution sur celui-ci d'une information spontanée précédente, une action provoquée par l'utilisateur sur le terminal (T).

4. Procédé de traitement suivant l'une quelconque des revendications précédentes, **caractérisé en ce que** ladite au moins une première caractéristique (CAR1, CAR2) d'informations spontanées de l'information spontanée (I1, I2) comprend au moins un premier thème (TH1, TH2) relatif à un contenu multimédia d'informations spontanées et ladite au moins une deuxième caractéristique (CART) d'informations spontanées du terminal (T) comprend au moins un deuxième thème (TH) relatif à un contenu multimédia d'informations spontanées,
le filtre (FA) d'analyse comparant (E8) le premier thème (TH1, TH2) de l'information spontanée (I1, I2) au deuxième thème (TH) du terminal (T) pour autoriser, dans le cas où la comparaison (E8) détermine que le premier thème (TH1, TH2) se retrouve dans le deuxième thème (TH), l'envoi (E14, E20) de l'information spontanée (I1, I2) au terminal (T) de restitution, et pour ne pas envoyer (E9), dans le cas où la comparaison (E8) détermine que le premier thème (TH1, TH2) ne se retrouve pas dans le deuxième thème (TH), l'information spontanée (I1, I2) au terminal (T) de restitution.

5. Procédé de traitement suivant l'une quelconque des revendications précédentes, **caractérisé en ce que**
la deuxième caractéristique (CART) d'informations spontanées est associée à un identifiant (IDT) du terminal (T) de restitution sur un serveur (SA) de gestion, distant du terminal (T) de restitution, dans au moins une table (THT, TAT), le filtre (FA) d'analyse se trouvant sur le serveur (SA) de gestion,
et la restitution, sur le terminal (T) de restitution, du flux multimédia (F1, F2), déclenche automatiquement l'interrogation par le filtre (FA) d'analyse de la deuxième caractéristique (CART) d'informations spontanées associée dans la table (THT, TAT) à l'identifiant (IDT) du terminal (T) de restitution.

6. Procédé de traitement suivant la revendication 5, **caractérisé en ce que**
l'association, dans la table (THT, TAT), de la deuxième caractéristique (CART) d'informations spontanées à l'identifiant (IDT) du terminal (T) de restitution, est exécutée à partir du terminal (T) de restitution.

7. Procédé de traitement suivant l'une quelconque des revendications 4 à 6, **caractérisé en ce que**
le deuxième thème (TH) du terminal (T) est associé à l'identifiant (IDT) du terminal (T) de restitution, dans une table (TTH) d'intérêt du serveur (SA) de gestion,
et/ou le deuxième indicateur (AT) de restitution est associé à l'identifiant (IDT) du terminal (T) de restitution, dans une table (TAT) d'indicateurs du serveur (SA) de gestion,
et la restitution, sur le terminal (T) de restitution, du flux multimédia (F1, F2), déclenche automatiquement l'interrogation par le filtre (FA) d'analyse du deuxième thème (TH) associé dans la table (THT) d'intérêt à l'identifiant (IDT) du terminal (T) de restitution et déclenche, en cas d'autorisation (E10) d'envoi (E14, E20) de l'information spontanée (I1, I2), l'interrogation par le filtre (FA) d'analyse du deuxième indicateur (AT) de restitution associé dans la table (TAT) d'indicateurs à l'identifiant (IDT) du terminal (T) de restitution ou, à défaut de deuxième indicateur (AT) de restitution, l'interrogation par le filtre (FA) d'analyse du premier indicateur (A1, A2) de restitution.

8. Procédé de traitement suivant l'une quelconque des revendications précédentes, **caractérisé en ce que**
la première caractéristique (CAR1, CAR2) d'informations spontanées est associée à l'information spontanée (I1, I2) sur une base (BI) de données de fourniture de l'information spontanée (I1, I2), distante du terminal (T) de restitution,
et la restitution, sur le terminal (T) de restitution, du flux multimédia (F1, F2), déclenche automatiquement l'interrogation par le filtre (FA) d'analyse de la première caractéristique (CAR1, CAR2) d'informations spontanées associée, dans la base (BI) de données, à l'information spontanée (I1,I2).

9. Serveur (SA) de gestion pour un traitement automatique d'informations spontanées destinées à être restituées sur un terminal (T) de restitution en tant que flux accessoire associé à un flux multimédia principal **caractérisé en ce qu'**il comporte :
des moyens pour recevoir des informations spontanées (I1, I2), depuis au moins une base (BI) de données de fourniture d'informations spontanées (I1, I2), chaque information spontanée (I1, I2) étant associée à au moins une première caractéristique (CAR1, CAR2) d'informations spontanées parmi un groupe de plusieurs caractéristiques (CAR) prescrites d'informations spontanées, ladite au moins une première caractéristique (CAR1, CAR2) d'informations spontanées de l'information spontanée (I1, I2) comprenant au moins un premier indicateur (A1, A2) de restitution, destiné au terminal (T),
des moyens pour associer au terminal (T) de restitution, sur au moins une table (TTH, TAT), au moins une deuxième caractéristique (CART) d'informations spontanées parmi le groupe de plusieurs caractéristiques (CAR) prescrites d'informations spontanées, ladite au moins une deuxième caractéristique (CART) d'informations spontanées du terminal (T) pouvant comprendre au moins un deuxième indicateur (AT) de restitution destiné au terminal (T), chacun desdits premier et deuxième indicateurs de restitution étant un indicateur de restitution immédiate ou un indicateur de restitution différée, et
un filtre (FA) d'analyse apte à recevoir lesdites première et deuxième caractéristiques (CAR1, CAR2, CART) et apte à déterminer si la deuxième caractéristique d'informations spontanées reçue comprend au moins un deuxième indicateur (AT) de restitution destiné au terminal, ledit filtre d'analyse étant en outre configuré pour commander (E13, E16, E17), en cas d'autorisation, l'envoi soit immédiat soit différé (E 14, E20) de l'information spontanée (I1, I2) au terminal (T) de restitution conformément au deuxième indicateur (AT) de restitution ou, en cas d'absence d'un deuxième indicateur (AT) de restitution dans la deuxième caractéristique d'informations reçue, conformément au premier indicateur (A1, A2) de restitution.

10. Dispositif de traitement automatique d'informations spontanées destinées à être restituées sur un terminal (T) de restitution avec un flux multimédia, **caractérisé en ce qu'**il comporte :
- au moins une base (BI) de données de fourniture d'informations spontanées (I1, I2), qui est distante du terminal (T) de restitution et dans laquelle chaque information spontanée (I1, I2) est associée à au moins une première caractéristique (CAR1, CAR2) d'informations spontanées parmi un groupe de plusieurs caractéristiques (CAR) prescrites d'informations spontanées,
ladite au moins une première caractéristique (CAR1, CAR2) d'informations spontanées de l'information spontanée (I1, I2) comprenant au moins un premier indicateur (A1, A2) de restitution, destiné au terminal (T), ladite au moins une deuxième caractéristique (CART) d'informations spontanées du terminal (T) pouvant comprendre au moins un deuxième indicateur (AT) de restitution, destiné au terminal (T), chacun desdits premier et deuxième indicateurs de restitution étant un indicateur de restitution immédiate ou un indicateur de restitution différée,
- au moins un serveur distant (SA) de gestion selon la revendication 9, ledit serveur comprenant en outre un moyen pour déclencher automatiquement, lorsqu'un flux multimédia (F1, F2) est restitué sur le terminal (T) de restitution, l'interrogation de la première caractéristique (CAR1, CAR2) associée à l'information spontanée (I1, 12) sur la base (BI) de données et d'une deuxième caractéristique (CART) associée au terminal (T) de restitution sur la table (TTH, TAT), et l'envoi au filtre (FA) d'analyse se trouvant sur le serveur (SA) de gestion, des première et deuxième caractéristiques (CAR1, CAR2, CART) obtenues.

11. Dispositif de traitement suivant la revendication 10, **caractérisé en ce que**
au moins l'un des premier et deuxième indicateurs (A1, A2) de restitution est choisi parmi un indicateur de restitution immédiate sur le terminal (T) pour commander l'envoi immédiat (E14) de l'information spontanée (I1, I2) au terminal (T) de restitution et un indicateur de restitution non immédiate pour commander l'envoi (E20) de l'information spontanée (I1, I2) au terminal (T) de restitution en cas de détection (E19) d'un évènement déclencheur déterminé par le filtre (FA) d'analyse.

12. Dispositif de traitement suivant la revendication 11, **caractérisé en ce que**
des moyens sont prévus pour envoyer des signaux au serveur (SA) de gestion pour lui communiquer la survenue des évènements provenant du terminal (T) de restitution.

13. Terminal (T) de restitution destiné à coopérer avec un serveur de gestion selon la revendication 9, **caractérisé en ce qu'**il comporte des moyens pour restituer l'information spontanée (I1, I2) lorsqu'elle lui a été envoyée.

## Claims

1. A method of automatically processing spontaneous information intended to be reproduced on a reproducer terminal (T) as secondary stream associated with a main multimedia stream, **characterized in that** each spontaneous information item (I1, I2) is associated with at least one first spontaneous information characteristic (CAR1, CAR2) from a group comprising a plurality of prescribed spontaneous information characteristics (CAR), the reproducer terminal (T) is associated with at least one second spontaneous information characteristic (CART) from the group comprising a plurality of prescribed spontaneous information characteristics (CAR), said at least one first spontaneous information characteristic (CAR1, CAR2) of the spontaneous information (I1, I2) comprising at least one first reproduction indicator (A1, A2) intended for the terminal (T), said at least one second spontaneous information characteristic (CART) of the terminal (T) possibly comprising at least one second reproduction indicator (AT) intended for the terminal (T), each of said first and second reproduction indicators being an immediate-reproduction indicator or a delayed-reproduction indicators;
and **in that** the method comprises:
the automatic sending, on the basis of a multimedia stream (F1 , F2) reproduced on the terminal (T), of the first and of the second characteristics (CAR1, CAR2, CART) of spontaneous information to an analysis filter (FA),
the analysis (E7, E8, E10), by the analysis filter, of the first and second spontaneous information characteristics received, the analysis filter being configured so as to determine, during said analysis, whether the second spontaneous information characteristic received comprises at least one second reproduction indicator (AT) destined for said terminal, in the event of authorization, the command (E13, E16, E17), by the analysis filter (FA), of the either immediate or delayed sending (E14, E20) of the spontaneous information (I1, I2) to the reproduction terminal (T) in accordance with the second reproduction indicator (AT) or, in the event of absence of a second reproduction indicator (AT) in the second spontaneous information characteristic received, in accordance with the first reproduction indicator (A1, A2) received,
the reproduction, by the terminal (T), of the spontaneous information (I1, I2) when the latter has been sent to it.

2. A processing method according to claim 1, **characterized in that** the first reproduction indicator (A1, A2) and/or the second reproduction indicator (AT) are each selected from an indicator of immediate reproduction on the terminal (T) to command the immediate sending (E14) of the spontaneous information (I1, I2) to the reproducer terminal (T) and an indicator of non-immediate reproduction to command the sending (E20) of the spontaneous information (I1, I2) to the reproducer terminal (T) in the event of detection (E19) of a triggering event determined by the analysis filter (FA).

3. A processing method according to claim 2, **characterized in that** the triggering event is determined from among the end of the reproduction of the multimedia stream (F1, F2) on the terminal (T), the sending on the terminal (T) of a request for stopping the reproduction of the stream (F1, F2), the stopping on the terminal (T) of the reproduction of the stream (F1, F2), the switching of the terminal to another stream (F1, F2) or program, a predefined time of reproduction of the spontaneous information (I1, I2) on the terminal (T), a prescribed period for deferring the reproduction of the spontaneous information (I1, I2) on the terminal (T), a prescribed period for deferring the reproduction of the spontaneous information (I1, I2) on the terminal (T) after the reproduction thereon of a previous spontaneous information item, an action of the user on the terminal (T).

4. A processing method according to any one of the preceding claims, **characterized in that** said at least one first spontaneous information characteristic (CAR1, CAR2) of the spontaneous information (I1, I2) comprises at least one first theme (TH1, TH2) relating to a spontaneous information multimedia content and said at least one second spontaneous information characteristic (CART) of the terminal (T) comprises at least one second theme (TH) relating to a spontaneous information multimedia content, the analysis filter (FA) comparing (E8) the first theme (TH1, TH2) of the spontaneous information (I1, I2) to the second theme (TH) of the terminal (T) to authorize sending (E14, E20) the spontaneous information (I1, I2) to the reproducer terminal (T) if the comparison (E8) determines that the first theme (TH1, TH2) is found in the second theme (TH) and to not send (E9) the spontaneous information (I1, I2) to the reproducer terminal (T) if the comparison (E8) determines that the first theme (TH1, TH2) is not found in the second theme (TH).

5. A processing method according to any one of the preceding claims, **characterized in that** the second spontaneous information characteristic (CART) is associated with an identifier (IDT) of the reproducer terminal (T) on a management server (SA) remote from the reproducer terminal (T) in at least one table (THT, TAT), the analysis filter (FA) being on the management server (SA), and the reproduction of the multimedia stream (F1, F2) on the reproducer terminal (T) automatically triggers consultation by the analysis filter (FA) of the second spontaneous information characteristic (CART) associated with the identifier (IDT) of the reproducer terminal (T) in the table (THT, TAT).

6. A processing method according to claim **characterized in that** the association of the second spontaneous information characteristic (CART) with the identifier (IDT) of the reproducer terminal (T) in the table (THT, TAT) is executed from the reproducer terminal (T).

7. A processing method according to any one of claims 4 to 6, **characterized in that** the second theme (TH) of the terminal (T) is associated with the identifier (IDT) of the reproducer terminal (T) in a table (TTH) of interest in the management server (SA), and/or the second reproduction indicator (AT) is associated with the identifier (IDT) of the reproducer terminal (T) in a table (TAT) of indicators in the management server (SA), and the reproduction of the multimedia stream (F1, F2) on the reproducer terminal (T) automatically triggers consultation by the analysis filter (FA) of the second theme (TH) associated with the identifier (IDT) of the reproducer terminal in the table (THT) of interest and, in the event of authorization (E10) to send (E14, E20) the spontaneous information (I1, I2), triggers consultation by the analysis filter (FA) of the second reproduction indicator (AT) associated with the identifier (IDT) of the reproducer terminal (T) in the table (TAT) of indicators or, in the absence of a second reproduction indicator (AT), consultation by the analysis filter (FA) of the first reproduction indicator (A1, A2).

8. A processing method according to any one of the preceding claims, **characterized in that** the first spontaneous information characteristic (CAR1, CAR2) is associated with the spontaneous information (I1, I2) in a database (BI) remote from the reproducer terminal (T) providing the spontaneous information (I1, I2) and the reproduction of the multimedia stream (F1, F2) on the reproducer terminal (T) automatically triggers consultation by the analysis filter (FA) of the first spontaneous information characteristic (CAR1, CAR2) associated with the spontaneous information (I1, I2) in the database (BI).

9. A management server (SA) for automatically processing spontaneous information intended to be reproduced on a reproduce terminal (T) as secondary stream associated with a main multimedia stream, **characterized in that** it comprises: means for receiving spontaneous information (I1, I2) from at least one database (BI) for supplying spontaneous information (I1, I2), each spontaneous information item (I1, I2) being associated with at least one first spontaneous information characteristic (CAR1), CAR2) from a (group comprising a plurality of prescribed spontaneous information characteristics (CAR), said at least one first spontaneous information characteristic (CAR1, CAR2) of the spontaneous information (I1, I2) comprising at least a first reproduction indicator (A1, A2) for the terminal (T); means for associating the reproducer terminal (T), in at least one table (TTH, TAT), with at least one second spontaneous information characteristic (CART) from the group of a plurality of prescribed spontaneous information characteristics (CAR), said at least one second spontaneous information characteristic (CART) of the terminal (T) possibly comprising at least one second reproduction indicator (AT) for the terminal (T) each of said first and second reproduction indicators being an immediate-reproduction indicator or a delayed-reproduction indicator; and an analysis filter (FA) able to receive said first and second characteristics (CAR1, CAR2, CART) and able to determine whether the second spontaneous information characteristic received comprises at least one second reproduction indicator (AT) intended for the terminal, said analysis filter being moreover configured so as to command (E13, E16, E17), in the event of authorization, the either immediate or delayed sending (E14, E20) of the spontaneous information (I1, I2) to the reproduction terminal (T) in accordance with the second reproduction indicator (AT) or, in the event of absence of a second reproduction indicator (AT) in the second information characteristic received, in accordance with the first reproduction indicator (A1, A2).

10. Apparatus for automatically processing spontaneous information intended to be reproduced on a reproducer terminal (T) with a multimedia stream, **characterized in that** it includes: at least one database (BI) remote from the reproducer terminal (T) for providing spontaneous information (I1, I2) and in which each spontaneous information item (I1, I2) is associated with at least one first spontaneous information characteristic (CAR1, CAR2) from a group of a plurality of prescribed spontaneous information characteristics (CAR), said at least one first spontaneous information characteristic (CAR1, CAR2) of the spontaneous information (I1, I2) comprising at least one first reproduction indicator (A1, A2), for the terminal (T), said at least one second spontaneous information characteristic (CART) of the terminal (T) possibly comprising at least one second reproduction indicator (AT), intended for the terminal (T), each of said first and second reproduction indicators being an immediate-reproduction indicator or a delayed-reproduction indicator; at least one remote management server (SA) according to claim 9, said server, also comprising a means for automatically triggering, when a multimedia stream (F1, F2) is reproduced on the reproducer terminal (T), consultation of the first characteristic (CAR1, CAR2) associated with the spontaneous information (I1, I2) in the database (BI) and of a second characteristic (CART) associated with the reproducer terminal (T) in the table (TTH, TAT), and sending to the analysis filter (FA) in the management server (SA) of the first and second characteristics (CAR1, CAR2, CART) obtained.

11. Processing apparatus according to claim 10, **characterized in that** at least one of the first and second reproduction indicators (A1, A2) is chosen from an indicator of immediate reproduction on the terminal (T) to command the immediate sending (E14) of the spontaneous information (I1, I2) to the reproducer terminal (T) and an indicator of non-immediate reproduction to command the sending (E20) of the spontaneous information (I1, I2) to the reproducer terminal (T) in the event of detection (E19) of a triggering event determined by the analysis filter (FA).

12. Processing apparatus according to claim 11, **characterized in that** means are provided for sending signals to the management server (SA) to communicate to it the occurrence of events originating from the reproducer terminal (T).

13. A reproducer terminal (T) for co-operating with a management server according to claim 9, **characterized in that** it includes means for reproducing the spontaneous information (I1, I2) when it has been sent thereto.

## Patentansprüche

1. Verfahren zur automatischen Verarbeitung spontaner Informationen, die dazu bestimmt sind, in einem Wiedergabe-Endgerät (T) als ein einem Haupt-Multimediafluss zugeordneter zusätzlicher Fluss wiedergegeben zu werden,
**dadurch gekennzeichnet, dass**
jede spontane Information (I1, I2) mindestens einem ersten Merkmal (CAR1, CAR2) spontaner Informationen unter einer Gruppe mehrerer vorgeschriebener Merkmale (CAR) spontaner Informationen zugeordnet ist,
das Wiedergabe-Endgerät (T) mindestens einem zweiten Merkmal (CART) spontaner Informationen unter der Gruppe mehrerer vorgeschriebener Merkmale (CAR) spontaner Informationen zugeordnet ist,
das mindestens eine erste Merkmal (CAR1, CAR2) spontaner Informationen der spontanen Information (I1, I2) mindestens einen für das Endgerät (T) bestimmten Wiedergabeanzeiger (A1, A2) enthält, das mindestens eine zweite Merkmal (CART) spontaner Informationen des Endgeräts (T) mindestens einen zweiten für das Endgerät (T) bestimmten Wiedergabeanzeiger (AT) enthalten kann, jeder der ersten und zweiten Wiedergabeanzeiger ein unmittelbarer Wiedergabeanzeiger oder ein verzögerter Wiedergabeanzeiger ist;
und dass das verfahren enthält:
das automatische Senden des ersten und des zweiten Merkmals (CAR1, CAR2, CART) spontaner Informationen ausgehend von einem im Endgerät (T) wiedergegebenen Multimediafluss (F1, F2) an einen Analysefilter (FA),
die Analyse (E7, E8, E10) der empfangenen ersten und zweiten Merkmale spontaner Informationen durch den Analysefilter, wobei der Analysefilter konfiguriert ist, um bei der Analyse, wenn das zweite empfangene Merkmal spontaner Informationen mindestens einen zweiten für das Endgerät bestimmten Wiedergabeanzeiger (AT) enthält, im Fall der Autorisierung, die Steuerung (E13, E16,
El7) durch den Analysefilter (FA) des entweder unmittelbaren oder verzögerten Sendens (E14, E20) der spontanen Information (I1, I2) an das Wiedergabe-Endgerät (T) gemäß dem zweiten Wiedergabeanzeiger (AT), oder, im Fall der Abwesenheit eines zweiten Wiedergabeanzeigers (AT) im zweiten empfangenen Merkmal spontaner Informationen gemäß dem ersten empfangenen Wiedergabeanzeiger (A1, A2) zu bestimmen,
die Wiedergabe der spontanen Information (I1, I2) durch das Endgerät (T), wenn diese an es gesendet wurde.

2. Verarbeitungsverfahren nach Anspruch 1, **dadurch gekennzeichnet, dass**
der erste Wiedergabeanzeiger (A1, A2) und/oder der zweite Wiedergabeanzeiger (AT) je unter einem unmittelbaren Wiedergabeanzeiger im Endgerät (T), um das unmittelbare Senden (E14) der spontanen Information (I1, I2) an das Wiedergabe-Endgerät (T) zu steuern, und einem nicht-unmittelbaren Wiedergabeanzeiger ausgewählt werden, um das Senden (E20) der spontanen Information (I1, I2) an das Wiedergabe-Endgerät (T) im Fall der Erfassung (E19) eines auslösenden Ereignisses zu steuern, das vom Analysefilter (FA) bestimmt wird.

3. Verarbeitungsverfahren nach Anspruch 2, **dadurch gekennzeichnet, dass**
das auslösende Ereignis unter dem Ende der Wiedergabe des Multimediaflusses (F1, F2) im Endgerät (T), dem Senden einer Forderung des Beendens der Wiedergabe des Flusses (F1, F2) im Endgerät (T), dem Beenden der Wiedergabe des Flusses (F1, F2) im Endgerät (T), dem Übergang des Endgeräts (T) auf einen anderen Fluss (F1, F2) oder Programm, einer vordefinierten Uhrzeit der Wiedergabe der spontanen Information (I1, I2) im Endgerät (T), einer vorgeschriebenen Dauer, um die Wiedergabe im Endgerät (T) der spontanen Information (I1, I2) zu verzögern, einer vorgeschriebenen Dauer, um die Wiedergabe der spontanen Information (I1, I2) im Endgerät (T) nach der Wiedergabe einer vorhergehenden spontanen Information in diesem zu verzögern, einer vom Benutzer im Endgerät (T) hervorgerufenen Aktion bestimmt wird.

4. Verarbeitungsverfahren nach einem der vorhergehenden Ansprüche, **dadurch gekennzeichnet, dass** das mindestens eine erste Merkmal (CAR1, CAR2) spontaner Informationen der spontanen Information (I1, I2) mindestens ein erstes Thema (TH1, TH2) bezüglich eines Multimediainhalts spontaner Informationen enthält, und das mindestens eine zweite Merkmal (CART) spontaner Informationen, des Endgeräts (T) mindestens ein zweites Thema (TH) bezüglich eines Multimediainhalts spontaner Informationen enthält, wobei der Analysefilter (FA) das erste Thema (TH1, TH2) der spontanen Information (I1, I2) mit dem zweiten Thema (TH) des Endgeräts (T) vergleicht (E8), um in dem Fall, in dem der Vergleich (E8) feststell, dass das erste Thema (TH1, TH2) sich im zweiten Thema (TH) wiederfindet, das Senden (E14, E20) der spontanen Information (I1, I2) an das Wiedergabe-Endgerät (T) zu autorisieren, und um in dem Fall, in dem der Vergleich (E8) feststellt, dass das erste Thema (TH1, TH2) sich nicht im zweiten Thema (TH) wiederfindet, die spontane Information (I1, I2) nicht an das Wiedergabe-Endgerät (T) zu senden.

5. Verarbeitungsverfahren nach einem der vorhergehenden Ansprüche, **dadurch gekennzeichnet, dass**
das zweite Merkmal (CART) spontaner Informationen einer Kennung (IDT) des Wiedergabe-Endgeräts (T) in einem vom Wiedergabe-Endgerät (T) entfernten Verwaltungsserver (SA) in mindestens einer Tabelle (THT, TAT) zugeordnet ist, wobei der Analysefilter (FA) sich im Verwaltungsserver (SA) befindet,
und die Wiedergabe des Multimediaflusses (F1, F2) im Wiedergabe-Endgerät (T) automatisch die Abfrage des zweiten Merkmals (CART) spontaner Informationen durch den Analysefilter (FA) auslöst, das in der Tabelle (THT, TAT) der Kennung (IDT) des Wiedergabe-Endgeräts (T) zugeordnet ist.

6. Verarbeitungsverfahren nach Anspruch 5, **dadurch gekennzeichnet, dass**
die Zuordnung des zweiten Merkmals (CART) spontaner Informationen zur Kennung (IDT) des Wiedergabe-Endgeräts (T) in der Tabelle (THT, TAT) ausgehend vom Wiedergabe-Endgerät (T) ausgeführt wird.

7. Verarbeitungsverfahren nach einem der Ansprüche 4 bis 6, **dadurch gekennzeichnet, dass** das zweite Thema (TH) des Endgerätes (T) der Kennung (IDT) des Wiedergabe-Endgeräts (T) in einer Interessentabelle (TTH) des verwaltungsserves (SA) zugeordnet ist,
und/oder der zweite Wiedergabeanzeiger (AT) der Kennung (IDT) des Wiedergabe-Endgeräts (T) in einer Anzeigertabelle (TAT) des Verwaltungsservers (SA) zugeordnet ist,
und die Wiedergabe der Multimediaflüsse (F1, F2) im Wiedergabe-Endgerät (T) automatisch die Abfrage des zweiten Themas (TH) durch den Analysefilter (FA) auslöst, das in der Interessentabelle (THT) der Kennung (IDT) des Wiedergabe-Endgeräts (T) zugeordnet ist, und im Fall der Autorisierung (E10) des Sendens (E14, E20) der spontanen Information (I1, I2) die Abfrage des in der Anzeigertabelle (TAT) der Kennung (IDT) des Wiedergabe-Endgeräts (T) zugeordneten zweiten Wiedergabeanzeigers (AT) durch den Analysefilter (FA), oder, bei fehlendem zweiten Wiedergabeanzeiger (AT), die Abfrage des ersten Wiedergabeanzeigers (A1, A2) durch den Analysefilter (FA) auslöst.

8. Verarbeitungsverfahren nach einem der vorhergehenden Ansprüche, **dadurch gekennzeichnet, dass**
das erste Merkmal (CAR1, CAR2) spontaner Informationen der spontanen Information (I1, I2) in einer vom Wiedergabe-Endgerät (T) entfernten Datenbank (B1) zur Lieferung der spontanen Information (I1, I2) zugeordnet ist,
und die Wiedergabe des Multimediaflusses (F1, F2) im Wiedergabe-Endgerät (T) automatisch die Abfrage des ersten Merkmals (CAR1, CAR2) spontaner Informationen durch den Analysefilter (FA) auslöst, das in der Datenbank (B1) der spontanen Information (I1, I2) zugeordnet ist.

9. Verwaltungsserver (SA) für eine automatische verarbeitung spontaner Informationen, die dazu bestimmt sind, in einem Wiedergabe-Endgerät (T) als einem Haupt-Multimediafluss zugeordneter zusätzlicher Fluss wiedergegeben zu werden, **dadurch gekennzeichnet, dass** er aufweist:
Einrichtungen, um spontane Informationen (I1, I2), von mindestens einer Datenbank (B1) zum Liefern spontaner Informationen (I1, I2) zu empfangen, wobei jede spontane Information (I1, I2) mindestens einem ersten Merkmal (CAR1, CAR2) spontaner Informationen unter einer Gruppe von mehreren vorgeschriebenen Merkmalen (CAR) spontaner Informationen zugeordnet ist, wobei das mindestens eine erste Merkmal (CAR1, CAR2) spontaner Informationen der spontanen Information (I1, I2) mindestens einen ersten Wiedergabeanzeiger (A1, A2) enthält, der für das Endgerät (T) bestimmt ist,
Einrichtungen, um dem Wiedergabe-Endgerät (T) in mindestens einer Tabelle (TTH, TAT) mindestens ein zweites Merkmal (CART) spontaner Informationen aus der Gruppe von mehreren vorgeschriebenen Merkmalen (CAR) spontaner Informationen zuzuordnen, wobei das mindestens eine zweite Merkmal (CART) spontaner Informationen des Endgeräts (T) mindestens einen für das Endgerät (T) bestimmten zweiten Wiedergabeanzeiger (AT) enthalten kann,
wobei jeder der ersten und zweiten Wiedergabeanzeiger ein unmittelbarer Wiedergabeanzeiger oder ein verzögerter Wiedergabeanzeiger ist, und
einen Analysefilter (FA), der die ersten und zweiten Merkmale (CAR1, CAR2, CART) empfangen und feststellen kann, ob das empfangene zweite Merkmal spontaner Informationen mindestens einen zweite für das Endgerät bestimmten Wiedergabeanzeiger (AT) enthält, wobei der Analysefilter außerdem konfiguriert ist, zum im Fall der Autorisierung das entweder unmittelbare oder verzögerte Senden (E14, E20) der spontanen Information (I1, I2) an das Wiedergabe-Endgerät (T) entsprechend dem zweiten Wiedergabeanzeiger (AT), oder, bei Abwesenheit eines zweiten Wiedergabeanzeigers (AT) im zweiten empfangenen Merkmal von Informationen, entsprechend dem ersten Wiedergabeanzeiger (A1, A2) zu steuern, (E13, E16, E17).

10. Vorrichtung zur automatischen Verarbeitung spontaner Informationen, die dazu bestimmt sind, in einem Wiedergabe-Endgerät (T) mit einem Multimediafluss wiedergegeben zu werden, **dadurch gekennzeichnet, dass** sie aufweist:
- mindestens eine Datenbank (B1) zum Liefern spontaner Informationen (I1, I2), die vom Wiedergabe-Endgerät (T) entfernt ist und in der jede spontane Information (I1, I2) mindestens einem ersten Merkmal (CAR1, CAR2) spontaner Informationen unter einer Gruppe von mehreren vorgeschriebenen Merkmalen (CAR) spontaner Informationen zugeordnet ist,
wobei das mindestens eine erste Merkmal (CAR1, CAR2) spontaner Informationen der spontanen Information (I1, I2) mindestens einen für das Endgerät (T) bestimmten ersten Wiedergabeanzeiger (A1, A2) enthält, wobei das mindestens eine zweite Merkmal (CART) spontaner Informationen des Endgeräts (T) mindestens einen zweiten für das Endgerät (T) bestimmten Wiedergabeanzeiger (AT) enthalten kann, wobei jeder der ersten und zweiten Wiedergabeanzeiger ein unmittelbarer Wiedergabeanzeiger oder ein verzögerter Wiedergabeanzeiger ist,
- mindestens einen fernen Verwaltungsserver (SA) nach Anspruch 9, wobei der Server außerdem eine Einrichtung enthält, um, wenn ein Multimediafluss (F1, F2) im Wiedergabe-Endgerät (T) wiedergegeben wird, automatisch die Abfrage des der spontanen Information (I1, I2) in der Datenbank (B1) zugeordneten ersten Merkmals (CAR1, CAR2) und eines dem Wiedergabe-Endgerät (T) in der Tabelle (TTH, TAT) zugeordneten zweiten Merkmals (CART) und das Senden der erhaltenen ersten und zweiten Merkmale (CAR1, CAR2, CART) an den im Verwaltungsserver (SA) befindlichen Analysefilter (FA) auszulösen.

11. Verarbeitungsvorrschtung nach Anspruch 10, **dadurch gekennzeichnet, dass**
mindestens einer der ersten und zweiten Wiedergabeanzeiger (A1, A2) unter einem unmittelbaren Wiedergabeanzeiger im Endgerät (T), um das unmittelbare Senden (E14) der spontanen Information (I1, I2) an das Wiedergabe-Endgerät (T) zu steuern, und einem nicht unmittelbaren Wiedergabeanzeiger ausgewählt wird, um das Senden (E20) der spontanen Information (I1, I2) an das Wiedergabe-Endgerät (T) im Fall der Erfassung (E19) eines auslösenden Ereignisses zu steuern, das vom Analysefilter (FA) festgestellt wird.

12. Verarbeitungsvorrichtung nach Anspruch 11, **dadurch gekennzeichnet, dass**
Einrichtungen vorgesehen sind, um Signale an den Verwaltungsserver (SA) zu senden, um ihm das Auftreten der vom Wiedergabe-Endgerät (T) kommenden Ereignisse mitzuteilen.

13. Wiedergabe-Endgerät (T), das dazu bestimmt ist, mit einem Verwaltungsserver nach Anspruch 9 zusammenzuwirken, **dadurch gekennzeichnet, dass** es Einrichtungen aufweist, um die spontane Information (I1, I2) wiederzugeben, wenn sie an es gesendet würde.
